# EUROPEAN PATENT APPLICATION

(11) **EP 3 741 484 A1**
(43) Date of publication of application: **25.11.2020**
(21) Application number: 20151680.4
(22) Date of filing: 14.01.2020
(51) Int. Cl.: B23B 39/04, B23B 47/26

(54) **DRILLING APPARATUS**

(30) Priority: 14.01.2019 PL 42857719
(71) Applicant: Kosinska, Joanna, 04-036 Warszawa (PL)
(72) Inventor: KOSINSKI, Robert, 21-230 Sosnowica (PL)
(74) Representative: Malcherek, Piotr

(57) **Abstract**

A drilling apparatus according to the invention is provided with a motor (9, 109) designed to drive a working tip. The apparatus comprises a first frame (5, 105), preferably in the form of a tube, where an actuator (6, 106) is attached to the bottom end of the first frame (5, 105) and a second frame (7, 107), preferably tube-shaped, is attached to the bottom end of the said actuator. The other end of the second frame (7, 107) is used to fix the working tip. The first frame (5, 105) is additionally linked to the second frame (7, 107) by means of at least two spring members, preferably gas springs (8, 108).

## Description

The invention refers to a drilling apparatus dedicated particularly for drilling and threading, specifically for drilling and threading of parts that are manufactured in small series or as single units.

The patent document US9050664B1 discloses an apparatus for z-axis (vertical) drilling designed for commercial PCB systems. The apparatus uses a pair of unitary guides that integrate movements of a linear actuator, a spindle and a pressure foot. The linear actuator is positioned directly above and coupled to the spindle and the unitary z-axis guides situated such that the centre of mass of all of the drilling assembly's moving components is collinear with the axis of rotation of the motor and spindle.

The description of the patent application CN107717014A discloses a die shearing device. The inner top plate of the frame is permanently attached to a motor, whilst the output side of the motor is permanently attached to a roll forming a slide provided with a sliding rail. The sliding rail is movably attached to four sliding bars and a slide rod is permanently attached to a vertical shearing ram and then to a roll. The shearing ram is provided with a strip-shaped sliding groove. The strip-shaped sliding groove is movably attached to one end of the a tie rod, whilst the other end of the tie rod is attached to the inner surface of the side plate of the frame. Bottom ends of the pushing bars are movably attached to an intermediate plate.

Other solutions related to drilling appliances are also known from patent descriptions CN102151876A1, CN108161080A, CN108161053A, CN105436572A, CN 104722792A and CN205128997U. Moreover, the patent description US4088417 discloses a drilling apparatus provided with a motor mounted on a plate and designed to drive a pulling bolt with a nut thereon and with the body of the working head mounted on the screw.

In addition, the document US 2015071719 discloses a drilling apparatus made up of two frames arranged movable one against another and mutually connected by means of a driving actuator.

The invention is intended to enable automation of the drilling and threading process by means of a simple drilling apparatus designed particularly to manufacture single units or small series of production. Yet another intention of the invention is to improve accuracy of drilling and threading with simultaneous simplification of the device operation.

The invention refers to a drilling apparatus that is defined in the independent Claim 1 and subsidiary dependent claims. The drilling apparatus according to the present invention is provided with a motor to actuate a working tip and comprises a first frame, preferably in the form of a tube, with an actuator attached to the bottom end of the first frame, as well as a second frame, also preferably in the form of a tube, attached to the bottom end of the actuator. The working tip is attached to the bottom end of the second frame. In addition, the first frame is connected to the second frame by means at least two spring members, preferably gas springs.

Preferably the apparatus comprises a plate with a throughout hole, where an additional motor designed to adjust working height of the working tip is attached to the top surface of the plate. The hole is intended to enable penetration of the motor shaft with a pulling bolt attached to it and with a nut sitting on the bolt. The nut supports the top plate of the first tube-shaped frame encapsulating the pulling bolt. The opposite end of the second frame supports the drilling motor designed to rotate the working tip.

If so, a safeguarding casing is preferably attached to the bottom side of the plate, preferably in the tubular form. In addition, a first slide bearing is preferably provided between the casing and the first portion of the frame with a second slide bearing provided between the casing and the second frame. It is also preferred when a corrugated screen is attached with its first end to the bottom portion of the casing and with the second end attached to the second frame. A limit switch is desirably attached to the plate at the side of the first frame. It is particularly desirable to fix the entire apparatus to a frame with a support table by means of a set of guiding rails.

For another embodiment of the drilling apparatus the first frame is connected to the second one also by means of a second actuator, whereas the first actuator and the second actuator as well as spring members in the form of gas springs are arranged outside the first frame and the second frame, whilst the driving shaft extends inside both the first and the second frame. One end of the shaft is linked to the spindle of the working tip and its other end is linked to the motor designed to drive the working tip.

If so, slide bearings are provided in between of the first and the second frame.

Moreover, the best solution assumes installation of the drilling apparatus by means of the main plate onto a set of guiding rails sitting on a frame with a mounting table.

The beneficial effects entailed by application of to the drilling apparatus include large working area, fast approaching of a working tool, such as a drilling bit or a threading tap, or quick and easy change of workpieces regardless of their sizes. The apparatus enables accurate adjustment of a pushing force during drilling or threading operations according to current needs and type of current jobs owing to simultaneous application of several springy members, preferably gas springs, combined with a actuator or actuators supplied from a pneumatic system, for instance a compressor. Gas springs are meant to compensate own weight of the apparatus during its operation, which enables floating functioning of the apparatus. The foregoing is extremely important, in particular for threading, since the speed of vertical up and down movements of the apparatus is automatically adjusted to match the tap stroke and rotation speed. The force acting on the workpiece can be easily amplified by increasing of pressure in the pneumatic actuator when such an excessive force is necessary for drilling boreholes and during the initial phase of threading. The solution enables smooth adjustment of the depressing force acting the working tip (working tool). Installation of the device with its spindle positioned in the centre by means of a frame with crosswise guiding bars enables its smooth and quick jogging to the working area. Application of a straightforward driving system by combination of spring members and a pneumatic actuator makes it possible to adjust the speed of vertical movements of tools to the stroke of tapped thread with no need to control rotation speed of the tool, which substantially simplifies and speed up threading of boreholes, in particular when short series of products are manufactured. In addition, the device according to the present invention enables self-centering of a tool against the borehole to be threaded or expanded with simultaneous prevention against uncontrolled side displacement of tools.

The invention is presented in its example embodiments on the accompanying drawings, wherein:
Fig. 1 presents the axonometric view of the drilling device according to the present invention in the first embodiment,
Fig. 2 presents the side view of the device,
Fig. 3 present the section of the device within the A-A plane from Fig. 2,
Fig. 4 presents the B detail of the device from Fig. 3,
Fig. 5 presents axonometric view of the device mounted on a support frame,
Fig. 6 presents the side view of the device in the second embodiment,
Fig. 7 presents the axonometric view of the device,
Fig. 8 presents the section of the device within the A-A plane from Fig. 6,
Fig. 9 presents the B detail of the device from Fig. 8, and
Fig. 10 presents axonometric view of the device mounted on a support frame.

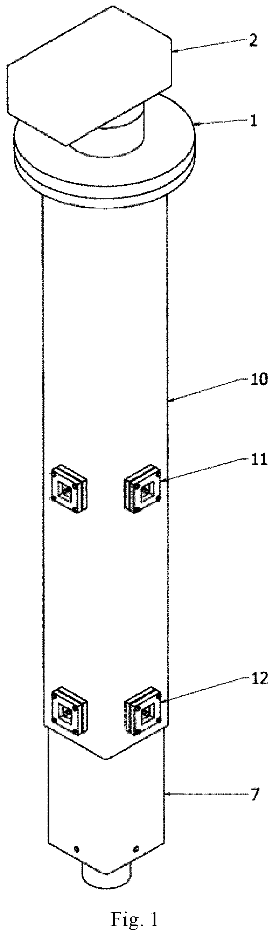

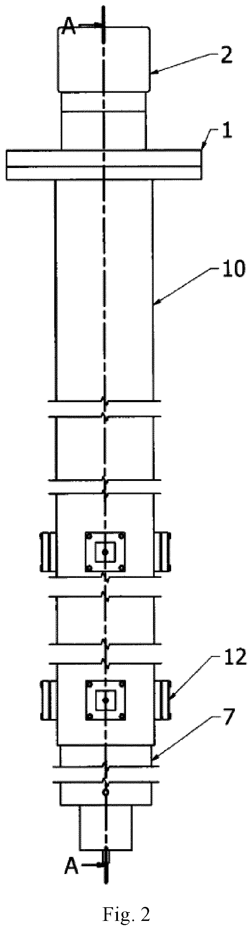

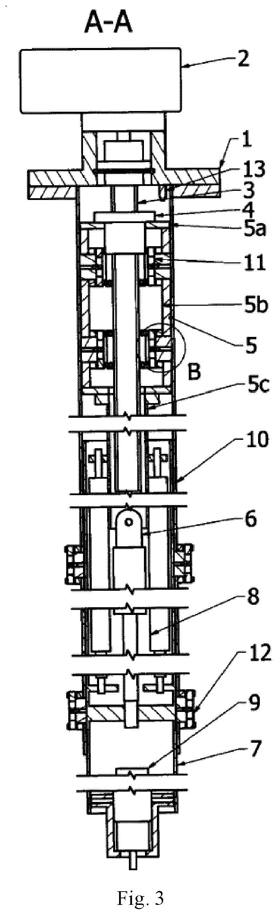

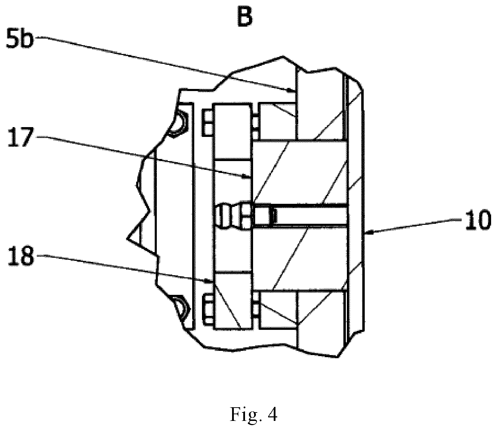

The drilling apparatus according to the first embodiment of the present invention (Fig. 1 to Fig. 5) comprises a plate 1 provided with a throughout hole, where a motor 2 designed to adjust operating elevation of the working tip is mounted on the top surface of the plate so that the motor shaft extends through the hole of the plate 1. A pulling bolt 3 with a trapezoidal thread is linked to the end of the motor 2 shaft and the pulling bolt 3 is combined with a nut 4 that can be screwed up and down the bolt. The nut serves as a support for a top plate 5a of a tube-shaped first frame 5. The first end of a hollow tube 5b with square cross-section is attached to the plate 5a whilst the second end of that tube is linked to the second tube 5c with round cross-section. The first frame 5 encapsulates the pulling bolts 3. A pneumatic or hydraulic actuator 6 is attached by means of a pin to the bottom end of the second tube 5c and the bottom end of the actuator is attached to a second frame 7 by means of a cross-bar, where the second frame is also designed as a tube with square cross-section. In addition, the first frame 5 and the second frame 7 are coupled by means of two gas springs 8. The bottom end of the second frame 7 is used to mount a drilling motor 9 and the motor spindle holds a working tip, such as a tool in the form of drilling bit or threading tap. A safeguarding casing 10 in the form of a square hollow tube is attached to the bottom surface of the plate 1. Two primary slide bearings 11 are provided in between of the safeguarding casing 10 and the first portion of the frame 5 at the both sides of the frame. Each slide bearing 11 is made as a cubical block 17 made of polyurethane with a throughout hole in the centre. The block 17 is inserted into the inner space of the hollow tube 5b and depressed to the internal surface of the casing 10 by means of a plate 18. The hole receives a lubricating head that is screwed into the hole at the side of the inner side of the first frame 5. In addition a second slide bearing 12, with the same design as the first slide bearing 11, is mounted on each wall, between the casing 10 and the second frame 7. A limit switch 13 is fixed to the plate 1 at the side of the first frame 5.

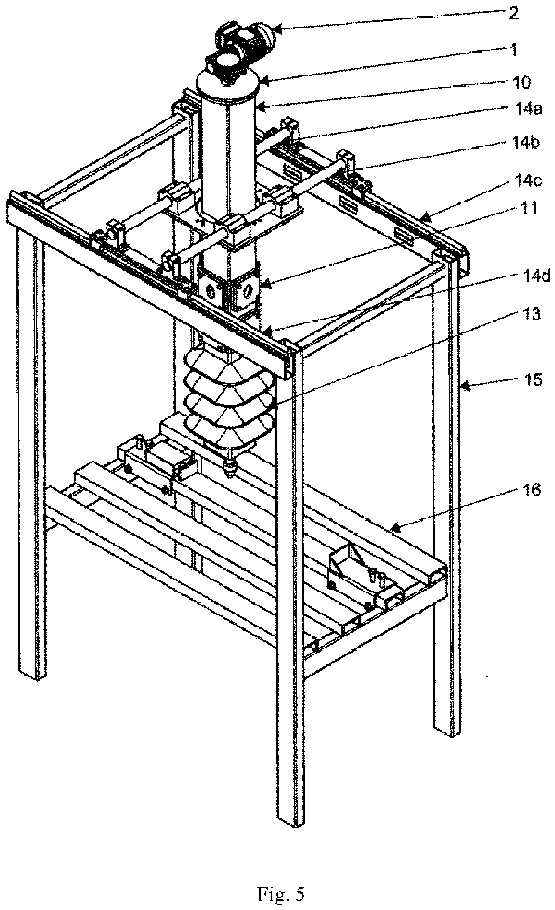

Fig. 5 shows a drilling apparatus installed by means of a main mounting plate in between of pair of horizontal guiding rails 14a and 14b, where ends of these guiding rails link to second pair of guiding rails 14c and 14d, whilst ends of that second pair of guiding rails rest on a frame 15. A working table 16 is fixed between legs of the frame 15. A corrugated screen 13 is attached at its one end to the bottom end of the casing 10, whilst the other end of the screen is attached to the second frame 7.

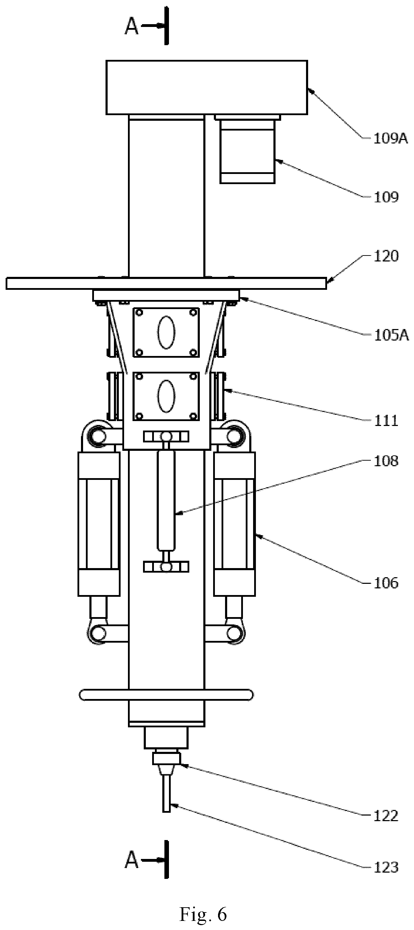

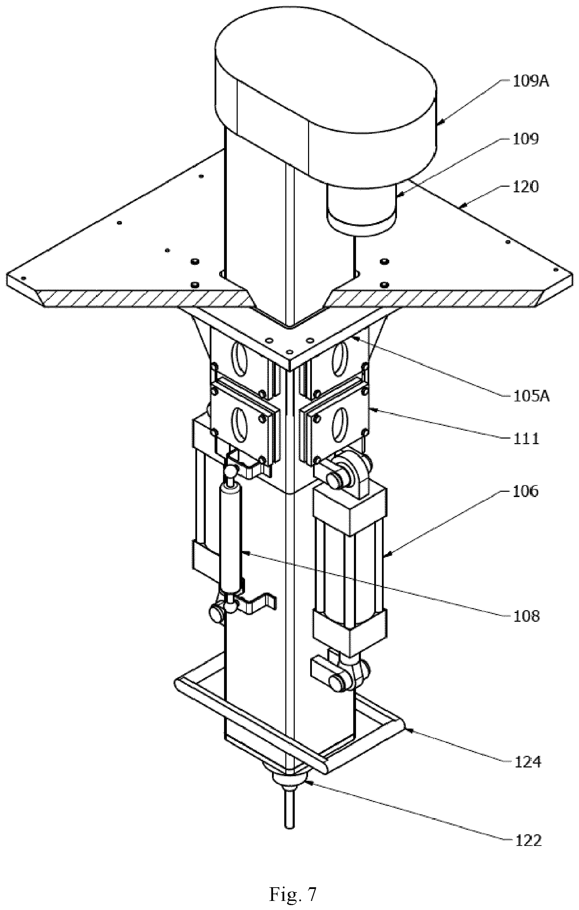

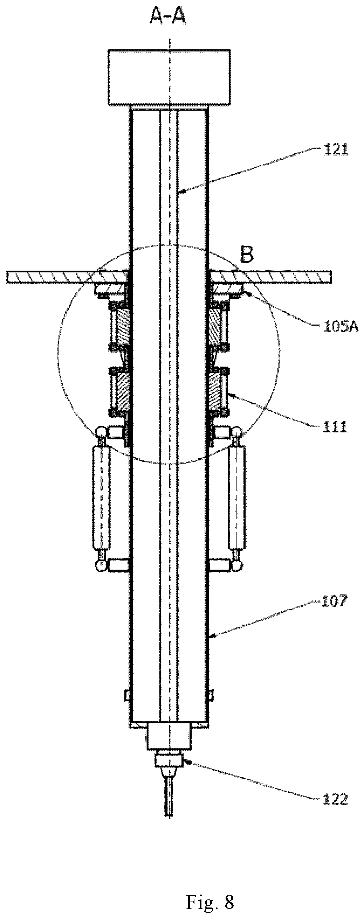

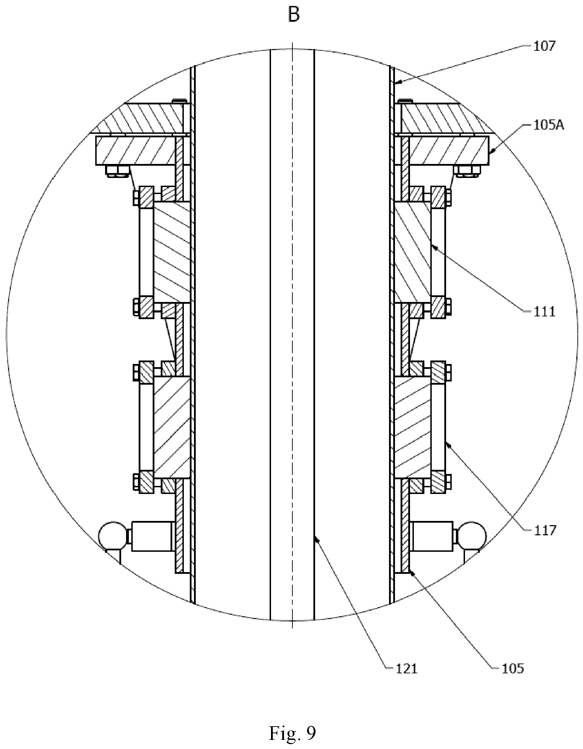

The second embodiment of the drilling apparatus according to the present invention is shown in Fig. 6 to Fig. 10. The apparatus has a first frame 105 and a second frame 107, where the second frame is much longer than the first one and is in sliding arrangement inside it. The bottom end of the first frame 105 is provided with two actuators 106, preferably pneumatic ones, attached with one ends to the first frame 105 and with the other ends to outer surfaces of the second frame 107. Slide bearings 111 with the design pretty similar to the ones applied to the first embodiment are arranged between the first frame 105 and the second frame 107, whilst a pushing plate 117 is designed to control and adjust the depressing force. In addition, the first frame 105 is linked to the second frame 107 by means at least two gas springs 108. Also other generally known springy devices can be applied instead of gas springs provided that they enable compensation of own weight of the apparatus. The first frame 105 and the second frame 107 encapsulate a driving shaft 121, where one, bottom end of the shaft is linked to a spindle 122 of a working tip 123, for example a drilling bit or a threading tap, whilst the top end of the shaft is coupled via a transmission 109A to a driving motor 109 designed to spin the working tip 123.

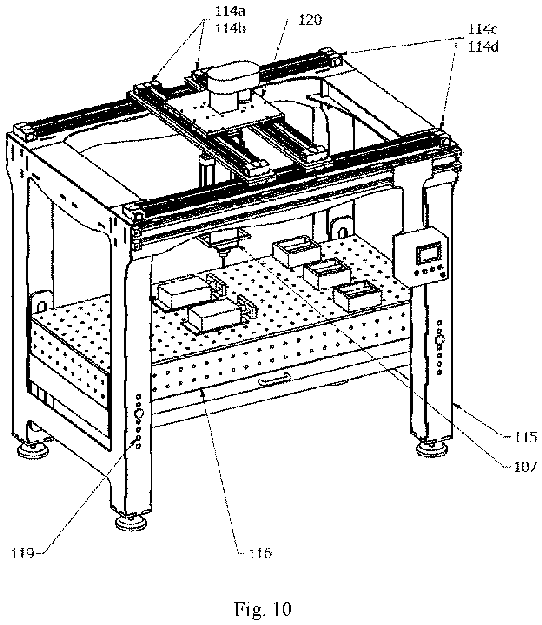

Fig. 10 shows a drilling apparatus installed by means of a main mounting plate 120 in between of pair of horizontal guiding rails 114a and 114b, where ends of these guiding rails sit on second pair of guiding rails 114c and 114d, whilst ends of that second pair of guiding rails rest on a frame 115. A working table 116 fixed between legs of the frame 115 is provided with a container for borings and a tank for coolant. In addition, the drilling apparatus is provided with a handling bracket 124. Elevation of the working tip 123 above the workpiece can be adjusted by displacement of the movable mounting table 116 that can be fixed to the legs of the frame 115 by means of pins inserted into holes of these legs at various height.

## Claims

1. A drilling apparatus provided with a motor (9, 109) designed to drive a working tip and comprising a first frame (5, 105), preferably in the form of a tube, where an actuator (6, 106) is attached to the bottom end of the first frame (5, 105), and a second frame (7, 107), preferably tube-shaped, is attached to the bottom end of the said actuator, whilst the other end of the second frame is used to fix the working tip, the apparatus is **characterized in that** the first frame (5, 105) is additionally linked to the second frame (7, 107) by means of at least two spring members, preferably gas springs (8, 108).

2. The drilling apparatus according to Claim 1, **characterized in that** it comprises a plate (1) with a throughout hole in it and an additional motor (2) designed to adjust elevation of the working tip above the workpiece, where the motor (2) rests on the top of the said plate (1) so that the shaft of that additional motor (2) extends through the hole in the mounting plate and a pulling bolt (3) with a nut (4) screwed thereon is attached to the motor shaft, wherein the nut (4) serves as a support for an upper plate (5a) of the tube-shaped first frame (5) that encapsulates the pulling bolt (3), and the main motor (9) designed to rotate the working tip is mounted at the other end of the tube-shaped second frame (7).

3. The drilling apparatus according to Claim 2, **characterized in that** a safeguarding casing (10), preferably a tube-shaped one, is attached to the bottom of the plate (1).

4. The drilling apparatus according to Claim 3, **characterized in that** a first slide bearing (11) is provided between the tube-shaped casing (10) and the first frame (5).

5. The drilling apparatus according to Claims 3 or 4, **characterized in that** a second slide bearing (12) is provided between the casing (10) and the second frame (7).

6. The drilling apparatus according to Claim 3, **characterized in that** a corrugated screen (13) is attached with its first end to the bottom portion of the casing (10) whilst the other end of the screen is attached to the second frame (7).

7. The drilling apparatus according to any Claim from 2 to 6 **characterized in that** a limit switch (13) is mounted on the plate (1) at the side of the first frame (5).

8. The drilling apparatus according to Claim 1, **characterized in that** the first frame (105) is connected with the second frame also by means of a second actuator (106), where the first actuator (106) and the second actuator (106) as well as spring members implemented as gas springs are provided outside both the first frame (105) and the second frame (107), whilst a driving shaft (121) extends inside both the first frame (105) and the second frame (107), where one end of the said shaft is linked to a spindle (122) of the working tip (123) and the other end of the shaft is coupled to the motor (109) designed to rotate the working tip (123).

9. The drilling apparatus according to Claim 8 **characterized in that** both the first frame (105) and the second frame (107) are tube-shaped.

10. The drilling apparatus according to Claim 8 or 9 **characterized in that** slide bearings (111) are provided between the first frame (105) and the second frame (107).

11. The drilling apparatus according to any Claim from 1 to 10, **characterized in that** it rests on a main plate and the plate together with the apparatus is attached to a plurality of guiding rails sitting on a frame with a mounting table.
